# FASCICULE DE BREVET EUROPEEN

(11) **EP 1 789 975 B1**
(45) Date de publication et mention de la délivrance du brevet: **26.03.2008**
(21) Numéro de dépôt: 05798967.5
(22) Date de dépôt: 07.09.2005
(51) Int. Cl.: H01B 3/16, H01B 3/30, H01B 9/00, H01F 27/00

(54) **DISPOSITIF DE HAUTE- OU MOYENNE-TENSION COMPRENANT UN SYSTEME DIELECTRIQUE PARTICULIER**
HOCH- ODER MITTELSPANNUNGSVORRICHTUNG MIT BESTIMMTEM DIELEKTRISCHEM SYSTEM
HIGH- OR MEDIUM-VOLTAGE DEVICE COMPRISING A PARTICULAR DIELECTRIC SYSTEM

(30) Priorité: 08.09.2004 FR 0451995
(43) Date de publication de la demande: 30.05.2007
(73) Titulaire: AREVA T&D SA, 92084 Paris La Défense Cedex (FR)
(72) Inventeur: BESSEDE, Jean Luc, F-38300 CHATEAUVILAIN (FR); HAIROUR, Mounir, F-34080 MONTPELLIER (FR); TOUREILLE, Alain, F-34830 CLAPIERS (FR)
(74) Mandataire: Poulin, Gérard
(86) Numéro de dépôt international: PCT/FR2005/050720
(87) Numéro de publication internationale: WO 2006/027534

(56) Documents cités:
- DE-C- 10 009 474
- FR-A- 2 197 725

## Description

### DOMAINE TECHNIQUE

L'invention a trait à un dispositif conducteur de l'électricité de haute- ou moyenne-tension et plus particulièrement à un système diélectrique prévu pour ce type de dispositif.

Ces dispositifs peuvent être notamment des transformateurs d'alimentation, des transformateurs de mesure, des disjoncteurs et également des barres omnibus (intitulé également jeux de barres).

Dans ce qui précède et ce qui suit, on précise que par moyenne-tension, on entend l'ensemble des gammes de tension généralement comprises entre 1 kV et 35 KV.

Par haute-tension, on entend l'ensemble des gammes de tension généralement supérieures à 35 kV.

### ETAT DE LA TECHNIQUE ANTÉRIEURE

Les dispositifs de haute- ou moyenne-tension présentent généralement une partie active conductrice de l'électricité, au niveau de laquelle est appliquée la haute- ou moyenne-tension. Cette partie active est généralement isolée de l'extérieur par une enveloppe, destinée à contenir et protéger la partie active, et un système diélectrique assurant le transport de l'énergie électrique et l'isolement électrique entre la partie active et l'enveloppe et remplissant l'espace vacant entre ladite partie active et ladite enveloppe. Cette partie active peut être uniquement isolée de l'extérieur par un système diélectrique assurant le transport de l'énergie électrique et l'isolement électrique entre la partie active et l'extérieur.

Pour être efficace, un système diélectrique doit répondre à un certain nombre de critères :
- il doit être transparent au champ électromagnétique ;
- il doit présenter une rigidité diélectrique suffisamment élevée, afin d'empêcher un claquage ou une décharge disruptive en cas de surtension traversant le dispositif ;
- il doit présenter une bonne stabilité au vieillissement ; en d'autres termes, sa rigidité diélectrique ne doit pas diminuer avec le temps ;
- il doit être chimiquement inerte au contact de la partie active et de l'enveloppe, ou de l'air ambiant, y compris à température élevée ;
- il doit posséder de bonnes caractéristiques de transfert thermique, de manière à faciliter l'évacuation de la chaleur consécutive au passage du courant.

Un système diélectrique couramment utilisé se rapprochant le plus des propriétés énoncées ci-dessus est le gaz SF₆. Toutefois, ce gaz implique un inconvénient environnemental, étant donné qu'il génère un effet de serre reconnu. Son utilisation, pour être conforme aux réglementations en vigueur, doit donc être gérée de façon très rigoureuse de sa fabrication à sa fin de vie et également durant son recyclage.

Afin de remédier à ce problème, plusieurs gaz existent comme remplaçants potentiels du SF₆. Mais en général le compromis entre l'impact sur l'effet de serre (mesuré par la grandeur dénommée GWP₁₀₀ (Global Potential Warming calculé sur 100 ans), correspondant en français à la terminologie « Potentiel de réchauffement du globe ») et les propriétés diélectriques est difficile à optimiser, comme le laisse voir le tableau ci-dessous.

| Gaz | Rigidité diélectrique relative par rapport à SF₆ | Impact sur l'effet de serre (GWP₁₀₀) |
|---|---|---|
| CF₃SF₅ | 1,51 | Supérieur à SF₆ |
| C₄F₁₀ | 1,36 | 7000 |
| c-C₄F₈ | 1,25 | 8700 |
| SF₆ | 1 | 23900 |
| C₃F₈ | 0,96 | 7000 |
| C₂F₆ | 0,78 | 9200 |
| CO | 0, 4 | 0,6 |
| CF₄ | 0,37 | 6500 |
| CO₂ | 0,3 | 1 |
| N₂O | 0,44 | 270 |
| N₂ | 0,36 | Aucun |
| Air (sec) | 0,3 | Aucun |
| H₂ | 0,18 | 2,4 |
| Ar | 0,07 | Aucun |

Ainsi, il a été proposé d'utiliser d'autres types de gaz diélectrique, ne présentant pas d'effet de serre, tel que l'azote.

Bien qu'il soit satisfaisant du point de vue environnemental, ce type de gaz ne présente cependant pas des propriétés diélectriques comparables à celles du SF₆ dans les mêmes conditions d'utilisation (pression, température, humidité).

Pour compenser cette perte en propriétés diélectriques, et notamment la rigidité diélectrique, une solution consisterait à mettre ce type de gaz, tel que l'azote, sous pression accrue (facteur 2 à 3 par rapport à celle utilisée pour le SF₆). Ceci impliquerait notamment de pourvoir les dispositifs électriques utilisant de tels gaz, d'enceintes suffisamment performantes et parfaitement étanches à la haute pression. De plus, l'efficacité de tels gaz mis sous pression n'a été prouvée, jusqu'à présent, que dans des dispositifs de moyenne-tension.

Pour contrer les inconvénients mentionnés ci-dessus, certains auteurs ont eu l'idée de remplacer les systèmes diélectriques gazeux par des systèmes diélectriques hybrides gaz-solide, c'est-à-dire des systèmes comprenant à la fois un matériau diélectrique gazeux et un matériau diélectrique solide déposé sous forme de couche(s) sur les éléments à isoler.

Ainsi, dans DE 100 09 474, il est décrit un dispositif électrique comprenant deux électrodes métalliques disposées concentriquement, c'est-à-dire que l'une des électrodes forme une enveloppe autour de l'autre électrode, dite électrode interne.

Ces deux électrodes sont séparées l'une de l'autre par un système diélectrique, qui comprend :
- une couche en polyéthylène déposée sur au moins une partie de la surface de l'électrode interne ;
- une couche en un matériau à base de SiC ou de ZnO déposée sur ladite couche en polyéthylène ;
- une couche de gaz diélectrique occupant l'espace vacant entre les deux électrodes.

Ce système diélectrique permet de prévenir efficacement les problèmes de décharge électrique.

Toutefois, il ne permet pas de limiter les phénomènes de décollement du polyéthylène vis-à-vis du conducteur et d'injection d'électrons du métal dans le polyéthylène, d'autant plus facilitée par ledit décollement.

Ces phénomènes d'injection d'électrons et plus généralement d'injections de charges électriques par les électrodes sont à l'origine très souvent des claquages électriques intervenant dans les dispositifs de moyenne ou haute-tension.

Ces phénomènes d'injection de charges, telles que les électrons, procèdent de différents mécanismes, tels que l'émission photoélectrique, l'émission photoionique, l'émission Schottky,...etc connus de l'homme du métier.

### EXPOSÉ DE L'INVENTION

Le but de la présente invention est de proposer un dispositif électrique haute- ou moyenne tension comportant un système diélectrique présentant une meilleure rigidité électrique et apte à limiter les phénomènes d'injection de charge à l'origine des phénomènes de claquage électrique dans les systèmes haute- et moyenne tension.

Le but de la présente invention est de proposer un dispositif électrique haute- ou moyenne-tension qui ne nécessite pas un emploi systématique de SF₆.

Ce but est atteint, selon l'invention, par un dispositif de haute- ou moyenne-tension comprenant une partie conductrice de l'électricité (3) et comprenant un système diélectrique, caractérisé en ce que ce système diélectrique comprend :
a) une couche solide semi-conductrice déposée sur ladite partie conductrice ;
b) une couche solide présentant une conductivité électrique non-linéaire en fonction du champ électrique déposée sur la couche solide semi-conductrice a);
c) une couche solide isolante de l'électricité déposée sur la couche b).

On précise que, selon l'invention, on entend généralement par couche semi-conductrice de l'électricité une couche présentant une conductivité électrique se situant entre celle des conducteurs et celle des isolants électriques et pouvant présenter notamment une résistivité comprise entre 10⁻⁶ et 10⁸ Ωm.

Par couche présentant une conductivité non-linéaire en fonction du champ appliqué, on entend, de façon générale une couche présentant une résistivité variant de façon non-linéaire entre la résistivité d'un isolant et la résistivité d'un semi-conducteur, voire d'un conducteur, en fonction de la tension.

Par couche isolante de l'électricité, on entend, de façon générale, une couche présentant une résistivité supérieure à 10⁵ Ωm.

En outre, le système diélectrique peut comprendre une couche solide présentant une conductivité électrique non-linéaire en fonction du champ électrique d) déposée sur la couche c), cette couche d) répondant globalement à la même définition que celle donnée ci-dessus et pouvant être en un matériau identique ou différent de celui de la couche b) .

Selon l'invention, la partie conductrice de l'électricité peut se présenter sous forme d'une barre sensiblement cylindrique en matériau métallique.

Selon un mode particulier de réalisation de l'invention, le dispositif de haute- ou moyenne-tension peut comprendre une enveloppe entourant ladite partie conductrice de l'électricité.

Dans ce cas de figure, la partie conductrice de l'électricité est généralement disposée coaxialement par rapport à l'enveloppe généralement en un matériau conducteur de l'électricité, les couches a), b), c), et éventuellement d) étant alors généralement disposées de manière concentrique sur la partie conductrice de l'électricité. On précise que par matériau conducteur, on entend, de manière générale, selon l'invention, tout matériau ou combinaison de matériaux présentant une résistivité inférieure à 10⁻⁴ Ωm. Ainsi, la partie conductrice de l'électricité et éventuellement l'enveloppe peuvent être constituées d'un matériau métallique, pouvant être choisi dans un groupe constitué par l'aluminium et ses alliages, le cuivre et ses alliages, l'acier.

Le système diélectrique peut comprendre en outre une couche gazeuse diélectrique, ladite couche étant disposée sur la couche c) ou éventuellement d). Cette couche gazeuse diélectrique, lorsque le dispositif de haute- ou moyenne-tension comprend une enveloppe, est disposée généralement entre la couche c) ou éventuellement d) et ladite enveloppe.

Grâce à la disposition des couches constituant le système diélectrique, les dispositifs haute- et moyenne tension de l'invention présentent une excellente rigidité diélectrique et une excellente capacité à limiter le phénomène d'injection d'électrons grâce notamment à la présence, dans le système diélectrique, d'une couche solide isolante et d'une ou éventuellement deux couches présentant une conductivité non-linéaire en fonction du champ électrique qui ont pour particularité de diminuer le champ électrique local susceptible d'apparaître entre la partie conductrice de l'électricité et l'extérieur.

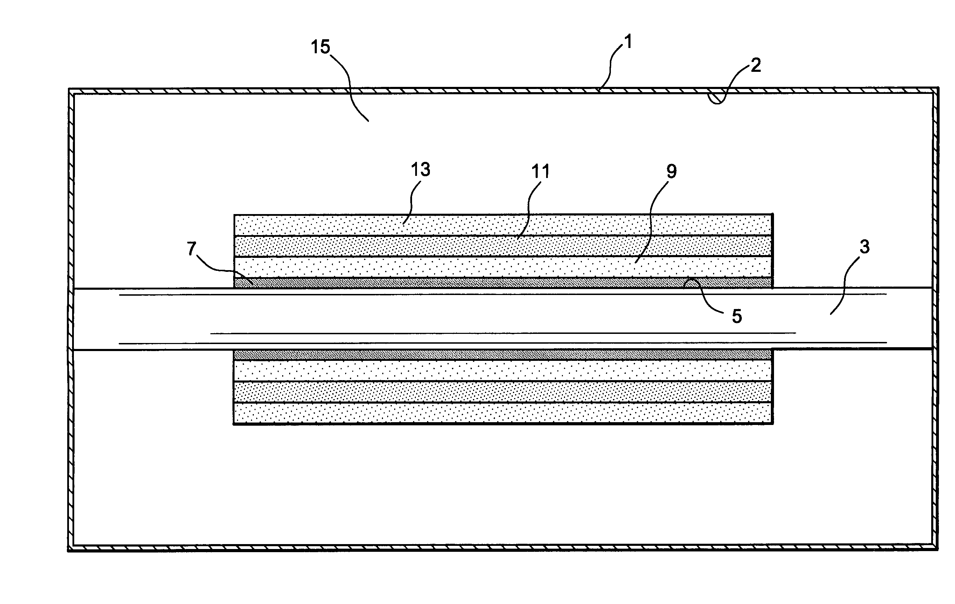

D'autres caractéristiques et avantages de la présente demande apparaîtront à la lecture de la description détaillée qui va suivre, et en regard du dessin annexé, donné à titre d'exemple non limitatif.

### BRÈVE DESCRIPTION DES DESSINS

La figure unique représente une coupe longitudinale d'un dispositif moyenne-tension ou haute-tension particulier conforme à l'invention.

### EXPOSÉ DÉTAILLÉ DE MODES DE RÉALISATION PARTICULIERS

Le dispositif haute- ou moyenne tension illustré sur la figure unique annexé comprend une enveloppe 1 métallique (correspondant dans ce cas de figure à une première électrode) et une partie conductrice de l'électricité 3 (correspondant dans ce cas de figure à une deuxième électrode), la deuxième électrode étant disposée de manière coaxiale par rapport à la première électrode et portée à une haute- ou moyenne-tension.

La première électrode et la deuxième électrode sont toutes deux de forme sensiblement cylindrique.

Comme mentionné précédemment dans l'exposé de l'invention, la partie conductrice de l'électricité et l'enveloppe peuvent être en un matériau métallique massif, tel que l'aluminium et ses alliages, le cuivre et ses alliages, l'acier. Elles peuvent être également constituées d'un matériau isolant, plaqué avec un matériau conducteur de l'électricité. C'est le cas notamment de l'enveloppe qui peut être constituée d'un matériau composite comprenant une matrice en un polymère isolant, tel qu'un polymère époxy ou un polyester, chargé éventuellement de particules ou fibres minérales (telles que des particules de silice, de wollastonite, d'alumine ou des fibres de verre) ladite matrice étant recouverte sur l'une au moins de ses faces d'un dépôt conducteur de l'électricité à base d'aluminium, de cuivre, d'or, d'argent ou de tout autre matériau conducteur de l'électricité.

Elles peuvent être également constituées d'un assemblage de différents matériaux tels que des brins de matériaux conducteurs de l'électricité éventuellement associés à des brins de matériaux destinés par exemple à donner une rigidité mécanique à l'ensemble.

Sur la surface 5 de la deuxième électrode est déposée une couche solide semi-conductrice 7.

Pour ce mode de réalisation ainsi que pour d'autres modes, cette couche solide semi-conductrice peut se présenter notamment sous forme d'une couche comprenant un matériau composite comprenant une matrice en polymère organique, ledit polymère organique pouvant être un polymère thermoplastique, tel que du polyéthylène, du polypropylène, du polytéréphtalate d'éthylène, un polymère thermodurcissable tel qu'un polymère époxy, un polyuréthanne, un polyester ou encore un polymère élastomérique telle qu'un polymère siliconé, l'EPDM (terpolymère éthylène-propylène-monomère diène). Dans cette matrice est dispersé un matériau pulvérulent faiblement conducteur. Ce matériau se présente avantageusement sous forme de particules de noir de carbone, par exemple, en une proportion allant de 10 à 50% en poids par rapport au poids total du matériau. Cette couche peut également contenir d'autres charges en particulier, des charges minérales telles que de la silice, de l'alumine, du dioxyde de titane, ou toute autre charge permettant d'améliorer les propriétés mécaniques du matériau et éventuellement l'adhésion de la couche sur la partie conductrice et des couches entre elles.

Une telle couche conforme à la présente invention peut présenter typiquement une épaisseur allant de 10 à 500 µm, de préférence de 100 à 300 µm.

Cette couche assure une triple fonction :
- elle assure une adhérence entre la deuxième électrode et la couche 9;
- elle régularise et lisse la surface de la deuxième électrode et limite ainsi l'apparition d'un champ électrique local intense et le phénomène d'injection d'électrons inhérent à l'apparition d'un tel champ ;
- elle constitue une première barrière résistive.

Cette couche est déposée classiquement par extrusion, pulvérisation, ou encore par trempage dans une solution liquide appropriée.

Sur cette couche solide semi-conductrice (7) est déposée ensuite une couche solide présentant une conductivité non-linéaire en fonction du champ électrique (9).

Pour ce mode de réalisation ainsi que pour d'autres, cette couche peut se présenter sous la forme d'une couche comprenant un matériau composite, comprenant une matrice en polymère organique, dans laquelle sont dispersées des particules d'un ou plusieurs matériaux présentant une conductivité non linéaire en fonction du champ électrique appliqué, ces particules étant de préférence en SiC et/ou ZnO.

La matrice en polymère organique peut être en un polymère choisi parmi les polymères thermoplastiques, tels que du polyéthylène, du polypropylène, du polytéréphtalate d'éthylène, les polymères thermodurcissables, tels qu'un polymère époxy, un polyuréthanne, un polyester, les polymères élastomériques, tels qu'un polymère silicone, l'EPDM.

Les particules de matériau à conductivité non linéaire en fonction du champ électrique appliqué, tels que du SiC et/ou ZnO, sont présentes typiquement en une teneur allant de 5 à 30 % en poids par rapport au poids total du matériau composite.

Cette couche peut également contenir d'autres charges, en particulier des charges minérales telles que de la silice, de l'alumine, du TiO₂ ou tout autre charge permettant d'améliorer les propriétés mécaniques du matériau et éventuellement l'adhésion de cette couche sur la couche semi-conductrice sous-jacente et les couches subséquentes.

Cette couche présente typiquement une épaisseur allant classiquement de 50 à 500 µm, et préférentiellement de 200 à 300 µm.

Cette couche peut être déposée par divers procédés tels que l'extrusion, la pulvérisation ou encore le trempage.

La couche 9 présente, comme il est mentionné plus haut, une conductivité non linéaire en fonction du champ électrique.

Ainsi, lorsque le champ électrique local entre la partie conductrice et l'enveloppe atteint une valeur telle qu'un phénomène d'injection d'électrons puisse se produire, la conductivité de la couche augmente contribuant ainsi à abaisser la valeur du champ électrique et à empêcher ainsi l'apparition d'injection d'électrons.

La couche 9 est ensuite recouverte d'une couche solide isolante de l'électricité, qui est, selon ce mode de réalisation, une couche à base d'un polymère organique isolant de l'électricité (11), dont le rôle est également de prévenir le phénomène d'injection d'électrons.

Selon ce mode de réalisation, mais sans y être limité, cette couche 11 peut être en un polymère choisi les polymères thermoplastiques, tels que du polyéthylène, du polypropylène, du polytéréphtalate d'éthylène, les polymères thermodurcissables, tels qu'un polymère époxy, un polyuréthanne, un polyester, les polymères élastomériques, tels qu'un polymère siliconé, l'EPDM.

Cette couche 11 peut être déposée par divers procédés tels que l'extrusion, la pulvérisation ou encore le trempage.

Cette couche peut également contenir des charges en particulier des charges minérales par exemple sous forme de poudre réputées pour permettre l'amélioration des propriétés diélectriques des isolants telles que du mica, de l'alumine, de la silice, ou toute autre charge permettant d'améliorer les propriétés mécaniques du matériau et éventuellement l'adhésion de cette couche avec la couche sous-jacente et les couches subséquentes.

Cette couche 11 présente typiquement une épaisseur allant de 0,1 à 5 mm, de préférence de 0,5 à 2 mm.

Enfin, la couche solide isolante en polymère organique 11 est recouverte, selon ce mode de réalisation, d'une couche solide présentant une conductivité non-linéaire en fonction de la tension le traversant 13. Cette couche peut être de composition identique ou différente de la couche 9.

Généralement, pour ce mode de réalisation, ainsi que pour d'autres, cette couche 13 se présente également sous forme d'une couche comprenant un matériau composite, comprenant une matrice en polymère organique, dans laquelle sont dispersées des particules en SiC et/ou ZnO, la teneur en SiC et/ou ZnO pouvant être différente de celle de la couche 9, lorsque celle-ci est en un matériau composite similaire. La teneur en inclusions de SiC ou ZnO peut aller de 5 à 30% en poids du matériau composite. L'épaisseur de la couche 13 est du même ordre de grandeur que celle de la couche 9, à savoir, est située dans une gamme allant de 50 à 500 µm, et préférentiellement de 200 à 300 µm.

La matrice est en un polymère, qui peut être de nature identique ou similaire à celui décrit ci-dessus pour la couche 9.

Elle peut être déposée selon les mêmes techniques de dépôt que celles développées plus haut pour le dépôt de la couche 9.

Il est à noter qu'entre chaque couche, et lors du dépôt de la première couche sur la partie conductrice de l'électricité, il peut être appliqué un traitement de surface visant à améliorer l'adhésion d'une couche sur l'autre ou sur ladite partie conductrice. Ce traitement peut consister à pulvériser une composition à base de silanes sur les surfaces appropriées. Ce traitement peut consister également en une fonctionnalisation par traitement laser desdites surfaces.

Selon un mode particulier de l'invention, les couches a), b), c) et éventuellement d) peuvent comprendre le même polymère organique, étant entendu que les couches se différencieront par les éléments spécifiques compris dans ce même polymère organique. Plus précisément, ces éléments seront avantageusement du noir de carbone pour la couche semi-conductrice, du SiC et/ou du ZnO pour la (les) couche(s) présentant une conductivité non-linéaire en fonction du champ électrique appliqué.

Dans ce cas de figure, le dépôt des couches pourra être réalisé de différentes manières.

Selon une première alternative, les différentes couches à base du même polymère de base peuvent être déposées successivement par pulvérisation d'un précurseur de ce polymère de base, le précurseur ayant été préalablement chargé d'éléments spécifiques adéquats tels que mentionnés ci-dessus. Puis, la couche de précurseur pulvérisée est séchée ou cuite pour obtenir la polymérisation du polymère de base. Pour ce cas particulier, l'on peut utiliser les précurseurs de polymère siliconé, tel que celui commercialisé par Polytec sous la marque Si-COAT^{™} 570. L'on peut également utiliser des précurseurs de polymère époxy, tel que celui distribué par la société 3M sous la marque Scotchcast^{™}, connu notamment pour ses propriétés isolantes jusqu'à des températures allant jusqu'à 180°C.

Selon une deuxième alternative, les différentes couches à base du même polymère organique de base peuvent être déposées successivement par extrusion de ce polymère, étant entendu que ce polymère aura été chargé préalablement des éléments spécifiques adéquats. Pour ce cas particulier, l'on pourra utiliser des polymères siliconés, tel que celui commercialisé par la société Getelec sous la marque Silicone GT ou encore celui commercialisé par la société Gessil sous la marque COVISIL^{®}.

Enfin, selon une troisième alternative, les différentes couches à base du même polymère de base peuvent être réalisées par enroulement de bandes pré-imprégnées dudit polymère, ledit polymère comprenant les différents éléments spécifiques permettant d'obtenir les caractéristiques recherchées. Par exemple, on peut utiliser des bandes de type CALMICA, CONTAFEL, CONDUCTOFOL, CONTAFEL.

Il est entendu que ces différentes alternatives de procédé sont également valables pour le cas où les couches seraient à base de polymères différents.

Enfin, le système diélectrique, selon ce mode de réalisation, est complété par une couche gazeuse diélectrique 15 comprenant un gaz diélectrique, avantageusement sous pression, par exemple de 1 à 15 bars (absolu), cette couche occupant l'espace vacant entre l'enveloppe 1 et la couche 13.

Selon l'invention, la couche gazeuse comprend avantageusement un gaz ou un mélange de gaz présentant une rigidité diélectrique supérieure à 10% de celle du SF₆, déterminée dans les mêmes conditions. Avantageusement, cette couche gazeuse présente un effet de serre moyen (GWP calculé sur 100 ans) inférieur à 15 000 fois l'effet de serre moyen du CO₂.

Selon l'invention, ce gaz constituant cette couche peut être de l'air, de l'azote, du protoxyde d'azote, du dioxyde de carbone, ou les mélanges de ceux-ci.

Cette couche peut comprendre, en outre, des additifs fluorés choisis parmi les fluorures minéraux, tels que CF₄, XeF₄, XeF₂, SiF₄, WF₆.

De préférence, cette couche est dénuée d'hexafluorure de soufre SF₆.

Il est entendu que l'empilement de couches solides constituant une partie du système diélectrique de l'invention peut être prévu sur la surface interne 2 de l'enveloppe 1 (c'est-à-dire la surface située en vis-à-vis de partie conductrice de l'électricité) seul ou en sus de celui déposé sur la partie conductrice susmentionné.

Il est à noter que les dispositifs de moyenne-tension ou haute-tension de l'invention peuvent être des systèmes de coupure de l'électricité, telles que des disjoncteurs, des systèmes transformateurs de l'électricité, tels que des transformateurs d'alimentation ou des transformateurs de mesure, des systèmes d'interconnexion électrique, tels que des barres omnibus.

Les dispositifs de moyenne-tension ou haute-tension s'appliquent tout particulièrement aux barres omnibus (ou jeu de barres) et aux lignes à isolation gazeuse (correspondant à la terminologie anglo-saxonne « Gaz Insulated Lines » (GIL)), qui permettent notamment le transport du courant entre une installation de production et le réseau de transport d'énergie électrique dans l'enceinte extérieure d'une centrale électrique.

Les dispositifs de moyenne-tension ou haute-tension s'appliquent aux systèmes multiphasés, tels que les systèmes triphasés, comprenant plusieurs parties conductrices de l'électricité recouvertes chacune d'un système diélectrique conforme à l'invention.

## Revendications

1. Dispositif de haute- ou moyenne-tension comprenant une partie conductrice de l'électricité (3) et comprenant un système diélectrique, **caractérisé en ce que** ce système diélectrique comprend :
a) une couche solide semi-conductrice (7) déposée sur ladite partie conductrice ;
b) une couche solide présentant une conductivité électrique non-linéaire en fonction du champ électrique (9) déposée sur la couche solide semi-conductrice (7) ;
c) une couche solide isolante de l'électricité (11) déposée sur la couche (9).

2. Dispositif de haute- ou moyenne-tension selon la revendication 1, **caractérisé en ce que** le système diélectrique comprend, en outre, une couche solide présentant une conductivité électrique non-linéaire en fonction du champ électrique (13) déposée sur la couche (11).

3. Dispositif de haute- ou moyenne-tension selon la revendication 1 ou 2, comprenant en outre une enveloppe (1) entourant ladite partie conductrice de l'électricité.

4. Dispositif de haute- ou moyenne-tension selon la revendication 3, **caractérisé en ce que** le système diélectrique comprend, en outre, une couche gazeuse diélectrique (15) disposée entre la couche (11) ou éventuellement la couche (13) et l'enveloppe (1).

5. Dispositif de haute- ou moyenne-tension selon la revendication selon l'une quelconque des revendications précédentes, dans lequel la partie conductrice de l'électricité (3) est en un matériau métallique.

6. Dispositif de haute- ou moyenne-tension selon l'une quelconque des revendications 1 à 5, dans lequel la couche solide semi-conductrice (7) comprend un matériau composite comprenant une matrice en polymère organique, dans laquelle sont dispersées des particules de noir de carbone.

7. Dispositif de haute- ou moyenne-tension selon la revendication 6, dans lequel le polymère organique est choisi dans le groupe constitué par les polymères thermoplastiques, les polymères thermodurcissables, les polymères élastomériques.

8. Dispositif de haute- ou moyenne tension selon la revendication 7, dans lequel le polymère thermoplastique est choisi dans le groupe constitué par le polyéthylène, le polypropylène, le polytéréphtalate d'éthylène.

9. Dispositif de haute- ou moyenne-tension selon la revendication 7, dans lequel le polymère thermodurcissable est choisi dans le groupe constitué par les polymères époxy, les polyuréthannes, les polyesters.

10. Dispositif de haute- ou moyenne-tension selon la revendication 7, dans lequel le polymère élastomérique est choisi dans le groupe constitué par les polymères siliconés, l'EPDM.

11. Dispositif de haute- ou moyenne-tension selon l'une quelconque des revendications 6 à 10, dans lequel les particules de noir de carbone sont présentes dans le matériau composite à une teneur allant de 10 à 50 % du poids total du matériau composite.

12. Dispositif de haute- ou moyenne-tension selon l'une quelconque des revendications 1 à 11, dans lequel la couche solide semi-conductrice (7) présente une épaisseur allant de 10 à 500 µm, de préférence de 100 à 300 µm.

13. Dispositif de haute- ou moyenne-tension selon l'une quelconque des revendications 1 à 12, dans lequel la couche solide présentant une conductivité non-linéaire en fonction du champ électrique (9) comprend un matériau composite, comprenant une matrice en polymère organique, dans laquelle sont dispersées des particules en SiC et/ou ZnO.

14. Dispositif de haute- ou moyenne-tension selon la revendication 13, dans lequel le polymère organique est tel que défini selon l'une quelconque des revendications 7 à 10.

15. Dispositif de haute- ou moyenne-tension selon la revendication 13, dans lequel les particules en SiC et/ou ZnO sont présentes à une teneur allant de 5 à 30 % en poids par rapport au poids total du matériau composite.

16. Dispositif de haute- ou moyenne-tension selon l'une quelconque des revendications 1 à 15, dans lequel la couche solide présentant une conductivité non-linéaire en fonction du champ électrique(9) présente une épaisseur allant de 50 à 500 µm, de préférence de 200 à 300 µm.

17. Dispositif de haute- ou moyenne-tension selon l'une quelconque des revendications 1 à 16, dans lequel la couche solide isolante de l'électricité (11) est une couche à base d'un polymère organique isolant de l'électricité.

18. Dispositif de haute- ou moyenne-tension selon la revendication 17, dans lequel le polymère organique isolant de l'électricité est tel que défini selon l'une quelconque des revendications 7 à 10.

19. Dispositif de haute- ou moyenne-tension selon l'une quelconque des revendications 1 à 18, dans lequel la couche solide isolante de l'électricité(11) présente une épaisseur allant de 0,1 à 5 mm, de préférence de 0,5 à 2 mm.

20. Dispositif de haute- ou moyenne-tension selon la revendication 2, dans lequel la couche solide présentant une conductivité non-linéaire en fonction du champ électrique (13) comprend un matériau composite, comprenant une matrice en polymère organique, dans laquelle sont dispersées des particules en SiC ou ZnO.

21. Dispositif de haute- ou moyenne-tension selon la revendication 20, dans lequel le polymère organique est tel que défini selon l'une quelconque des revendications 7 à 10.

22. Dispositif de haute- ou moyenne-tension selon la revendication 20 ou 21, dans lequel les particules en SiC ou ZnO sont présentes en une teneur allant de 5 à 30 % en poids par rapport au poids total du matériau composite.

23. Dispositif de haute- ou moyenne-tension selon la revendication 2, dans lequel la couche (13) présente une épaisseur allant de 50 à 500 µm, de préférence de 200 à 300 µm.

24. Dispositif de haute- ou moyenne-tension selon les revendications 6, 13, 17 et 20, dans lequel les couches (7), (9), (11) et (13) sont à base du même polymère organique.

25. Dispositif de haute- ou moyenne-tension selon la revendication 4, dans lequel la couche gazeuse diélectrique (15) est une couche comprenant au moins un gaz choisi dans le groupe constitué par l'air, l'azote, le protoxyde d'azote, le dioxyde de carbone et les mélanges de ceux-ci.

26. Dispositif de haute- ou moyenne-tension selon la revendication 25, dans lequel le gaz est sous pression.

27. Dispositif de haute- ou moyenne-tension selon la revendication 25 ou 26, dans lequel la couche gazeuse diélectrique (15) est dénuée d'hexafluorure de soufre.

28. Dispositif de haute- ou moyenne-tension selon la revendication 4, 25, 26 ou 27, dans lequel la couche gazeuse diélectrique (15) comprend, en outre, des additifs fluorés choisis parmi les fluorures minéraux.

29. Dispositif de haute- ou moyenne-tension selon la revendication 28, dans lequel le fluorure minéral est choisi dans le groupe constitué par XeF₂, XeF₄, SiF₄, WF₆, CF₄.

30. Dispositif de haute- ou moyenne-tension selon l'une quelconque des revendications 1 à 29, qui est un transformateur d'alimentation, un transformateur de mesure, un disjoncteur, un jeu de barres, une ligne à isolation gazeuse.

## Claims

1. High-voltage or medium-voltage device comprising an electrically conducting part (3) and comprising a dielectric system, **characterized in that** this dielectric system comprises:
a) a semiconducting solid layer (7) deposited on the said conducting part;
b) a solid layer (9) exhibiting non-linear electrical conductivity as a function of the electric field, this layer being deposited on the semiconducting solid layer (7); and
c) an electrically insulating solid layer (11) deposited on the layer (9).

2. High-voltage or medium-voltage device according to Claim 1, **characterized in that** the dielectric system further includes a solid layer (13) exhibiting non-linear electrical conductivity as a function of the electric field, deposited on the layer (11).

3. High-voltage or medium-voltage device according to Claim 1 or 2, which further includes a casing (1) surrounding the said electrically conducting part.

4. High-voltage or medium-voltage device according to Claim 3, **characterized in that** the dielectric system further includes a gaseous dielectric layer (15) placed between the layer (11) or optionally the layer (13), and the casing (1).

5. High-voltage or medium-voltage device according to any one of the preceding claims, in which the electrically conducting part (3) is made of a metallic material.

6. High-voltage or medium-voltage device according to any ore of Claims 1 to 5 in which the semiconducting solid layer (7) comprises a composite consisting of a matrix made of an organic polymer, in which carbon black particles are dispersed.

7. High-voltage or medium-voltage device according to Claim 6, in which the organic polymer is chosen from the group consisting of thermoplastic polymers, thermosetting polymers and elastomeric polymers.

8. High-voltage or medium-voltage device according to Claim 7, in which the thermoplastic polymer is chosen from the group consisting of polyethylene, polypropylene and polyethylene terephthalate.

9. High-voltage or medium-voltage device according to Claim 7, in which the thermosetting polymer is chosen from the group consisting of epoxy polymers, polyurethanes and polyesters.

10. High-voltage or medium-voltage device according to Claim 7, in which the elastomeric polymer is chosen from the group consisting of silicone polymers and EPDM.

11. High-voltage or medium-voltage device according to any one of Claims 6 to 10, in which the carbon black particles are present in the composite with a content ranging from 10 to 50% of the total weight of the composite.

12. High-voltage or medium-voltage device according to any one of Claims 1 to 11, in which the semiconducting solid layer (7) has a thickness ranging from 10 to 500 µm preferably from 100 to 300 µm.

13. High-voltage or medium-voltage device according to any one of Claims 1 to 12, in which the solid layer (9) exhibiting non-linear conductivity as a function of the electric field comprises a composite, consisting of a matrix made of an organic polymer in which SiC and/or ZnO particles are dispersed.

14. High-voltage or medium-voltage device according to Claim 13, in which the organic polymer is as defined according to any one of Claims 7 to 10.

15. High-voltage or medium-voltage device according to Claim 13, in which the SiC and/or ZnO particles are present with a content ranging from 5 to 30% by weight relative to the total weight of the composite.

16. High-voltage or medium-voltage device according to any one of Claims 1 to 15, in which the solid layer (9) exhibiting non-linear conductivity as a function of the electric field has a thickness ranging from 50 to 500 µm, preferably from 200 to 300 µm.

17. High-voltage or medium-voltage device according to any one of Claims 1 to 16, in which the electrically insulating solid layer (11) is a layer based on an electrically insulating organic polymer.

18. High-voltage or medium-voltage device according to Claim 17, in which the electrically insulating organic polymer is as defined according to any one of Claims 7 to 10.

19. High-voltage or medium-voltage device according to any one of Claims 1 to 18, in which the electrically insulating solid layer (11) has a thickness ranging from 0.1 to 5 mm, preferably from 0.5 to 2 mm.

20. High-voltage or medium-voltage device according to Claim 2, in which the solid layer (13) exhibiting non-linear conductivity as a function of the electric field comprises a composite consisting of a matrix made of an organic polymer in which SiC or ZnO particles are dispersed.

21. High-voltage or medium-voltage device according to Claim 20, in which the organic polymer is as defined according to any one of Claims 7 to 10.

22. High-voltage or medium-voltage device according to Claim 20 or 21, in which the SiC or ZnO particles are present with a content ranging from 5 to 30% by weight relative to the total weight of the composite.

23. High-voltage or medium-voltage device according to Claim 2, in which the layer (13) has a thickness ranging from 50 to 500 µm, preferably from 200 to 300 µm.

24. High-voltage or medium-voltage device according to Claims 6, 13, 17 and 20, in which the layers (7), (9), (11) and (13) are based on the same organic polymer.

25. High-voltage or medium-voltage device according to Claim 4, in which the gaseous dielectric layer (15) is a layer comprising at least one gas chosen from the group consisting of air, nitrogen, nitrous oxide, carbon dioxide and mixtures thereof.

26. High-voltage or medium-voltage device according to Claim 25, in which the gas is under pressure.

27. High-voltage or medium-voltage device according to Claim 25 or 26, in which the gaseous dielectric layer (15) contains no sulphur hexafluoride.

28. High-voltage or medium-voltage device according to Claim 4, 25, 26 or 27, in which the gaseous dielectric layer (15) further includes fluorinated additives chosen from mineral fluorides.

29. High-voltage or medium-voltage device according to Claim 28, in which the mineral fluoride is chosen from the group consisting of XeF₂, XeF₄, SiF₄, WF₆, CF₄.

30. High-voltage or medium-voltage device according to any one of Claims 1 to 29, which is a power transformer, a measurement transformer, a circuit breaker, a busbar or a gas insulated line.

## Patentansprüche

1. Hoch- bzw. Mittelspannungsvorrichtung mit einem elektrisch leitfähigem Teil (3) und einem dielektrischen System, **dadurch gekennzeichnet, dass** dieses dielektrische System enthält:
a) eine halbleitende Feststoffschicht (7), die auf den leitfähigen Teil aufgebracht ist,
b) eine Feststoffschicht mit einer nichtlinearen elektrischen Leitfähigkeit in Abhängigkeit von dem elektrischen Feld (9), die auf die halbleitende Feststoffschicht (7) aufgebracht ist,
c) eine elektrisch isolierende Feststoffschicht (11), die auf die Schicht (9) aufgebracht ist.

2. Hoch- bzw. Mittelspannungsvorrichtung nach Anspruch 1, **dadurch gekennzeichnet, dass** das dielektrische System ferner eine Feststoffschicht mit einer nichtlinearen elektrischen Leitfähigkeit in Abhängigkeit von dem elektrischen Feld (13) aufweist, die auf die Schicht (11) aufgebracht ist.

3. Hoch- bzw. Mittelspannungsvorrichtung nach Anspruch 1 oder 2, ferner enthaltend einen Mantel (1), der den elektrisch leitenden Teil umgibt.

4. Hoch- bzw. Mittelspannungsvorrichtung nach Anspruch 3, **dadurch gekennzeichnet, dass** das dielektrische System ferner eine dielektrische Gasschicht (15) enthält, die zwischen der Schicht (11) bzw. gegebenenfalls der Schicht (13) und dem Mantel (1) angeordnet ist.

5. Hoch- bzw. Mittelspannungsvorrichtung nach einem der vorangehenden Ansprüche, wobei der elektrisch leitfähige Teil (3) aus einem metallischen Werkstoff ist.

6. Hoch- bzw. Mittelspannungsvorrichtung nach einem der Ansprüche 1 bis 5, wobei die halbleitende Feststoffschicht (7) ein Verbundmaterial mit einer Matrix aus organischem Polymer enthält, in welcher russschwarze Teilchen verteilt sind.

7. Hoch- bzw. Mittelspannungsvorrichtung nach Anspruch 6, wobei das organische Polymer ausgewählt ist aus der Gruppe umfassend thermoplastische Polymere, warmaushärtende Polymere, Elastomerpolymere.

8. Hoch- bzw; Mittelspannungsvorrichtung nach Anspruch 7, wobei das thermoplastische Polymer ausgewählt ist aus der Gruppe umfassend Polyethylen, Polypropylen, Polyethylenterephthalat.

9. Hoch- bzw. Mittelspannungsvorrichtung nach Anspruch 7, wobei das warmaushärtende Polymer ausgewählt ist aus der Gruppe umfassend Epoxidpolymere, Polyurethane, Polyester.

10. Hoch- bzw. Mittelspannungsvorrichtung nach Anspruch 7, wobei das Elastomerpolymer ausgewählt ist aus der Gruppe umfassend Silikonpolymere, EPDM.

11. Hoch- bzw, Mittelspannungsvorrichtung nach einem der Ansprüche 6 bis 10, wobei die russschwarzen Teilchen in dem Verbundmaterial mit einem Gehalt von 10 bis 50 % des Gesamtgewichts an Verbundmaterial vorhanden sind

12. Hoch- bzw. Mittelspannungsvorrichtung nach einem der Ansprüche 1 bis 11, wobei die halbleitende Feststoffschicht (7) eine Materialdicke von 10 bis 500 µm, vorzugsweise von 100 bis 300 µm aufweist.

13. Hoch- bzw. Mittelspannungsvorrichtung nach einem der Ansprüche 1 bis 12, wobei die Feststoffschicht mit einer nichtlinearen Leitfähigkeit in Abhängigkeit von dem elektrischen Feld (9) ein Verbundmaterial enthält, das eine Matrix aus organischem Polymer aufweist, in welcher SiC- und/oder ZnO-Teilchen verteilt sind.

14. Hoch- bzw. Mittelspannungsvorrichtung nach Anspruch 13, wobei das organische Polymer derart ist, wie es nach einem der Ansprüche 7 bis 10 definiert ist.

15. Hoch- bzw. Mittelspannungsvomchtung nach Anspruch 13, wobei die SiC- und/oder ZnO-Teilchen mit einem Gehalt von 5 bis 30 Gew.-% bezogen auf das Gesamtgewicht des Verbundmaterials vorhanden sind.

16. Hoch- bzw. Mittelspannungsvorrichtung nach einem der Ansprüche 1 bis 15, wobei die Feststoffschicht mit nichtlinearer Leitfähigkeit in Abhängigkeit von dem elektrischen Feld (9) eine Materialdicke von 50 bis 500 µm, vorzugsweise von 200 bis 300 µm aufweist.

17. Hoch- bzw. Mittelspannungsvorrichtung nach einem der Ansprüche 1 bis 16, wobei die elektrisch isolierende Feststoffschicht (11) eine Schicht auf Basis von elektrisch isolierendem organischen Polymer ist.

18. Hoch- bzw. Mittelspannungsvorrichtung nach Anspruch 17, wobei das elektrisch isolierende organische Polymer derart ist, wie es nach einem der Ansprüche 7 bis 10 definiert ist.

19. Hoch- bzw. Mittelspannungsvorriclitting nach einem der Ansprüche 1 bis 18, wobei die elektrisch isolierende Feststoffschicht (11) eine Materialdicke von 0,1 bis 5 mm, vorzugsweise von 0,5 bis 2 mm aufweist.

20. Hoch- bzw. Mittelspannungsvomchtung nach Anspruch 2, wobei die Feststoffsehicht mit nichtlinearer Leitfähigkeit in Abhängigkeit von dem elektrischen Feld (13) ein Verbundmaterial enthält, das eine Matrix aus organischem Polymer aufweist, in welcher SiC- oder ZnO-Teilchen verteilt sind.

21. Hoch- bzw. Mittelspannungsvorrichtung nach Anspruch 20, wobei das organische Polymer derart ist, wie es nach einem der Ansprüche 7 bis 10 definiert ist.

22. Hoch- bzw. Mittelspannungsvorrichtung nach Anspruch 20 oder 21, wobei die SiC- oder ZnO-Teilchen mit einem Gehalt von 5 bis 30 Gew.-% bezogen auf das Gesamtgewicht des Verbundmaterials vorhanden sind.

23. Hoch- bzw. Mittelspannungsvorrichtung nach Anspruch 2, wobei die Schicht (13) eine Materialdicke von 50 bis 500 µm, vorzugsweise von 200 bis 300 µm aufweist.

24. Hoch- bzw. Mittelspannungsvorrichtung nach den Ansprüchen 6, 13, 17 und 20, wobei die Schichten (7). (9), (11) und (13) auf Basis des gleichen organischen Polymers bestehen.

25. Hoch- bzw. Mittelspannungsvonichtung nach Anspruch 4, wobei die dielektrische Gasschicht (15) eine Schicht mit zumindest einem Gas ausgewählt aus der Gruppe umfassend Luft, Stickstoff, Stickstoffoxid, Kohlendioxid und deren Gemische ist.

26. Hoch- bzw. Mittelspannungsvorrichtung nach Anspruch 25, wobei das Gas unter Druck steht.

27. Hoch- bzw. Mittelspannungsvorrichtung nach Anspruch 25 oder 26, wobei die dielektrische Gasschicht (15) frei von Schwefelhexafluorid ist.

28. Hoch- bzw. Mittelspannungsvorrichtung nach Anspruch 4, 25, 26 oder 27, wobei die dielektrische Gasschicht (15) ferner Fluorzusatzstoffe (15) ausgewählt aus mineralischen Fluoriden enthält.

29. Hoch- bzw. Mittelspantmngsvorrichtung nach Anspruch 28, wobei das mineralische Fluorid ausgewählt ist aus der Gruppe umfassend XeF₂, XeF₄, SiF₄, WF₆, CF₄.

30. Hoch- bzw. Mittelspannungs Vorrichtung nach einem der Ansprüche 1 bis 29, die ein Versorgungstransformator, ein Messwandler, ein Schutzschalter, ein Sammelschienensysteny eine gasisolierte Leitung ist.
